# EUROPEAN PATENT APPLICATION

(11) **EP 1 469 690 A1**
(43) Date of publication of application: **20.10.2004**
(21) Application number: 04252183.1
(22) Date of filing: 14.04.2004
(51) Int. Cl.: H04Q 7/22, G06F 17/60

(54) **Marketing method**

(30) Priority: 14.04.2003 SG 200302224
(71) Applicant: Pezzaniti, Domenico, Singapore 239114 (SG)
(72) Inventor: Pezzaniti, Domenico, Meng Garden, Singapore 730808 (SG); Megargel, Alan, Singapore 730808 (SG)
(74) Representative: Jackson, Richard Eric

(57) **Abstract**

A first party provides third party access to second party information through a network. The third party is able to use a device capable of receiving unsolicited communications (spam), without the second party receiving spam enabling information concerning the third party device. The first party receives an information identifier and a device identifier over a network, retrieves information associated with the information identifier and forwards the information to the requesting device over the network. The first party undertakes not to provide requesting device identifiers to the second party.

## Description

### TECHNICAL FIELD

The present invention relates to a method of marketing using information identifiers associated with information.

### BACKGROUND ART

Even if advertisements or snippets of information catch potential customer's attention it is very easy for them to forget. Even when customers make a conscious effort to remember the details they may forget them soon after. Most traditional forms of advertisement are received as bursts or flashes of information. For example television advertisements, bus advertisements or posters on busy sidewalks are all viewed as bursts of information. Potential customers do not have time to read details, let alone remember or record them.

For this reason during advertising campaigns advertisers repeat advertisements. Most companies use advertising to inform customers and potential customers of their products and or services.

Because of the proliferation of mobile phones and other mobile wireless connected devices, they have become an appealing channel for advertisers to send unsolicited information to a database of known mobile phone owners, in order for them to receive advertising information directly. This is typically done by sending short messages known as SMS messages, and can be done by using a computers and software applications that are available on the retail market. These usually unsolicited, SMS advertisements aggravate mobile phone owners. Message broadcasting is similar to email spamming but is considered more offensive and annoying because of the personal nature of the mobile phone.

Even though advertisers know the issue regarding spamming of mobile phones, some persist because there are few alternatives to getting their advertising message to potential customers so directly. Currently the only choice for users is to opt in to SMS marketing plans if they want to receive future advertising information. Doing this means that companies are free to send you as many messages as they like, and most likely only a small percentage of these messages will be of direct interest to a particular user.

If a user has opted to subscribe to several companies, this may lead to a continuous SMS type/wireless bombardment. There is a fine line between marketing and spamming. This fear of spamming deters many users from keeping their subscriptions and from subscribing to other SMS message lists. Keeping track of the numerous subscriptions can be overwhelming.

Several wireless (e.g. SMS based) interactive systems do allow end users to send in keyword type codes to initiate an information exchange, but in doing so the mobile telephone user is revealing their mobile phone number to the service provider which has traditionally been independent merchants or companies.

The telephone number is revealed because in sending an SMS message, the sender's phone number is normally included in the transmission. Once merchants have captured the users mobile phone number, it can be expected that the user will receive future promotional SMS from the merchant. This uncertainty leaves the end user apprehensive in using the service at all, because of the fear of spamming.

Some telecommunication companies offer SMS advertising through their customer channel, by charging the advertiser a fee per message to each of their subscribers. The telecommunication companies' subscriber base is kept confidential. Other companies also customize mobile advertising campaigns using SMS interactivity. This is better than spamming, but still exposes users' phone numbers and does not provide any enduring benefit to the user. For the merchant, it also means that an expensive SMS campaign needs to be periodically reproduced.

Existing interactive systems typically use words, acronyms, abbreviations or numbers as the identifying codes used to initiate the SMS communications. This tends to limit the number of codes that can be generated and makes tracking a difficult process. It also means that for lengthy codes, it is difficult for end users to remember and enter the codes into the mobile device in certain situations.

Even after the information has been delivered to the end user by either of the above methods, the user has only a limited amount of space (slots) on their mobile phone, and so once read it is deleted, and because the message is not readily available probably forgotten.

### DISCLOSURE OF THE INVENTION

It is an object of the present invention to provide a method of marketing that goes some way to overcoming the abovementioned disadvantages in the prior art or which will at least provide the public with a useful choice.

Accordingly, the present invention consists in a method of providing as a first party, third party access to second party information through a network, the third party using a device capable of receiving unsolicited communications (spam), without the second party receiving spam enabling information concerning the third party device, said method including the steps of:
receiving a request over said network, said request including an information identifier and a device identifier;
retrieving information associated with said information identifier and forwarding said information to said requesting device over said network; and
undertaking not to provide requesting device identifier to said second party.

### BRIEF DESCRIPTION OF THE DRAWINGS

Preferred embodiments of the invention will now be described with reference to the accompanying drawings in which:
Figure 1 is a block diagram of the system of the present invention
Figure 2 is a flow diagram of the present invention,
Figure 3 is a block diagram of an alternative embodiment of the present invention,
Figure 4 is a diagram of an SMS keypad,
Figure 5 is a block diagram of a further alternative embodiment of the present invention,
Figure 6 is a screen of an information entry interface of the present invention,
Figure 7 is screen showing statistical information based on information accessed,
Figure 8 is a mobile device screen showing a menu display.

### BEST MODES FOR CARRYING OUT THE INVENTION

The present invention provides a mechanism for advertisers to give the user control, while keeping their mobile number confidential.

Confidentiality helps to prevent spamming and builds user confidence. Being able to capture and store information, be it information displayed (ID) or advertising details for long-term storage, and the ability to retrieve relevant information at will, is advantageous to the end user.

Advertising is the accepted term for making information in some form publicly and generally known. While in some contexts advertising and marketing are thought of as limited to promotion this specification includes other information, for example opening hours and company contact details within the definition of advertising. This type of information posting will hereinafter be referred to as information display (ID).

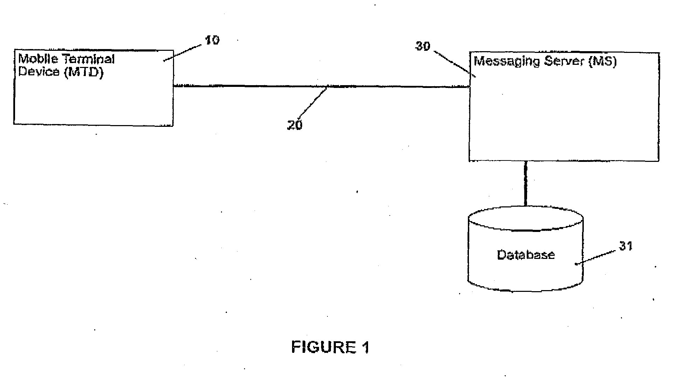

Referring the Figure 1, the preferred embodiment of the present invention provides a means to interact with information using a mobile terminal device (MTD) 10, a mobile telephone for example. Such interaction can be thought of as information invoking (II).

Information is invoked by entering an identifier into a mobile terminal device 10. The mobile terminal device 10 communicates the identifier to a message server (MS) 30. The mobile terminal device 10 includes other information in the request such as a device identifier. The message server 30 responds to the mobile terminal device with the requested information. In addition to responding to the mobile terminal device 10 the messaging server 30 stores the information in a database 31 in association with the mobile device 10 identifier so that the information can be accessed at any time by the mobile terminal device 10.

In the preferred embodiment the mobile terminal device 10 is a cellular telephone, but could also be another type of device such as a PDA with wireless connectivity, or a combined device having both cellular phone and PDA capabilities.

The preferred method of by which the mobile terminal device submits information to the messaging server 30 is by transmitting the identifier through a cellular network. Short Message Services (SMS), is the preferred method of data transmission but other wireless network protocols such as Enhanced Messaging Service (EMS), Multimedia Messaging Service (MMS), the Wireless Application Protocol (WAP), Unstructured Supplementary Services Data (USSD), Universal Mobile Telephone System (UMTS), GSM and I-Mode could also be utilized.

Other wireless networks could be used, such as but not limited to wireless 802.11 (Wi-Fi). When used in association with alternative wireless networks, an application would be loaded onto the mobile terminal device to allow communication and interaction with the messaging server 30.

The system of the present invention utilizes identifiers termed human recognizable alphanumeric codes (HRAC's) that are associated with or embedded within the media of presentation. Being human recognizable means that they are easily understood visually or verbally, since not all media can be physically reached or touched at any given time. Examples of where HRAC's can be embedding are print, radio, television and internet advertising.

HRAC's may be encrypted using known encryption techniques, depending on the application. If a HRAC is associated with an end user, rather than abstract information, it is encrypted to help protect end users privacy. The basic format of a HRAC is adaptive and can vary in character length depending on which media or event it is assigned to. For radio broadcasting a HRAC could be as little as 3 characters. A short HRAC makes it easier for listeners to remember. In print 5 to 6 characters would be used but less could be used.

The length of a HRAC is not fixed for a given media application. A shorter HRAC is preferred because humans/end users cannot be expected to remember long alphanumeric identifiers with only a few seconds of exposure.

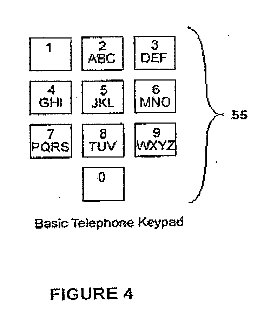

HRAC's are optimized for SMS entry using mobile phones. Only letters are used, and the letter sequence of the HRAC's where possible optimizes the speed of entry by using letters that do not require the user to press the same key twice in sequence on a mobile phone keypad. This means that no pauses are required between key entrees. These are characteristics specific to SMS entry on a mobile phone. Figure 4 shows a keypad of a mobile telephone, letters are associated with a given number key 55. An example of a HRAC is "DJM" entered using the numbers "356"; a further example is "PTMKHB" entered using "796541". While it is preferable to create HRAC's using this coding method any other coding could also be used.

When created by the system 30, a HRAC is associated with information within a database 31 accessible by the system server 30; this information is termed active information (AI). When a HRAC is assigned to its media of use, the information is termed an "information object" (10).

When an advertiser implements and thus publishes information objects for their use, it does so for a given event, referred to as an "information event" (IE). Thus there may be several information object's for a given information event and many information event's for a single advertiser.

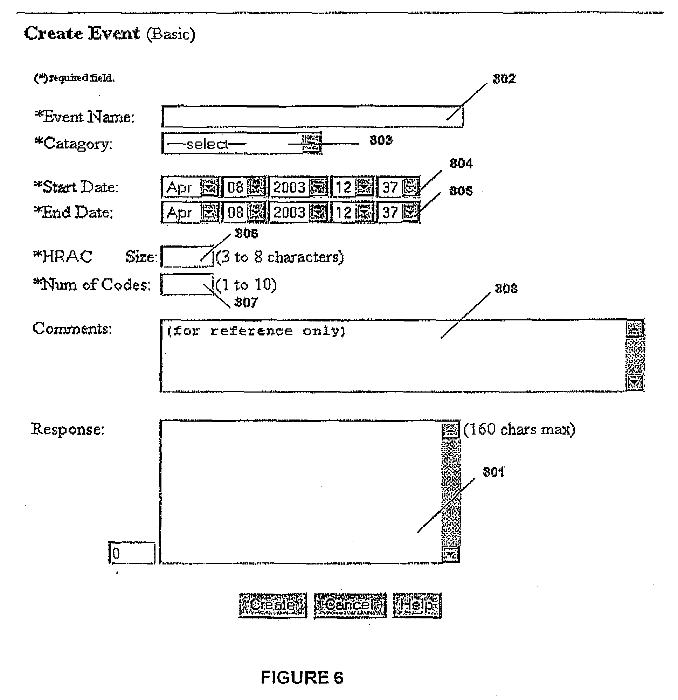

In the preferred embodiment, the central server 30 provides an interface shown in Figure 6 to create and store active information within the system 30. The advertiser has the ability to provide the response the user sees 801 and assign an event name 802, category 803, start 804 and end date 805, the desired HRAC size 806, the number of HRAC's created and associated with the event 807 and add a comment 808. The system also has the ability to allow the user to create more advanced responses including providing the user with a menu.

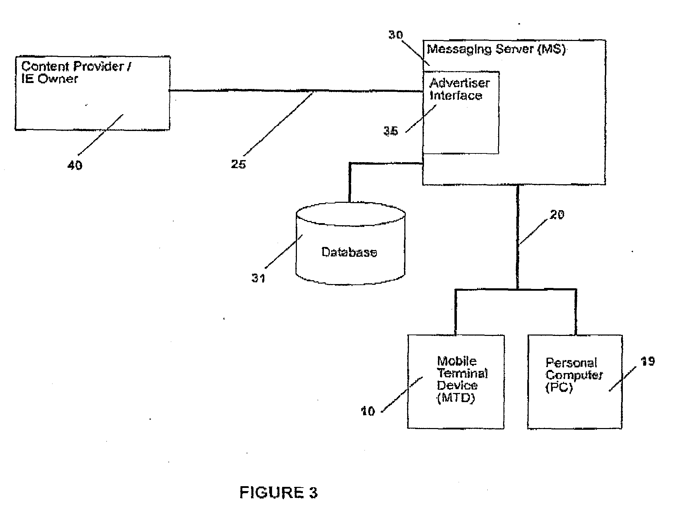

Referring to Figure 3 an advertiser interface component 35 of the message server 30 allows advertisers to input information and to access reports. Since the preferred embodiment of the coding method allows for many non-specific identifying codes (HRAC's) to be generated, information event owners can easily distribute and publish information objects.

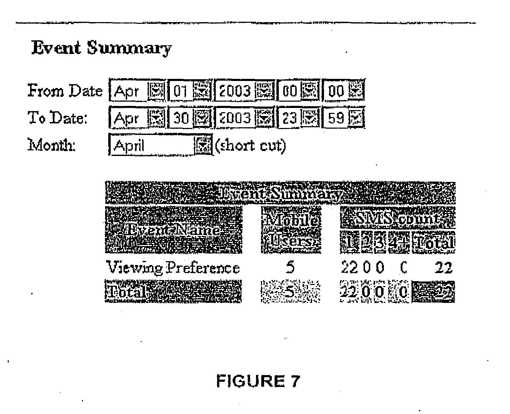

The messaging system 30 is able to consolidate relevant user information, and perform demographic and behavior analysis based on information invoking activity and provides reports such as shown in Figure 7. Location based analysis and interaction is also possible since one information event may have multiple information object's assigned to it at different locations and the location of the events publication may be stored in database 31.

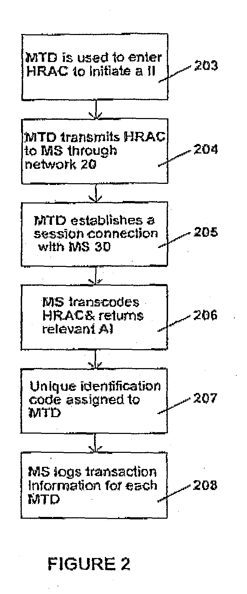

Referring to Figure 2 users initiate 203 information invoking, by entering the HRAC into the mobile terminal device 10. The mobile terminal device 10 transmits 204 the HRAC to the message server 30, over a wireless network 20, there by establishing a session connection 205 with the message server 30.

The system 30 translates 206 the HRAC's to retrieve the relevant information from the database 31. This information is then returned to the requesting mobile terminal device 10.

If it is the first time a specific mobile terminal device 10 has initiated information invoking, a unique identification code is assigned 207 to the mobile terminal device 10. The unique identification code is stored in the database 31 in association with parameters used to identify the mobile terminal 10. In the preferred embodiment the phone number of a mobile telephone is used to identify a mobile terminal 10. The use of unique identification codes ensures that user profiles are not lost if parameters used to identify the mobile terminal device 10 are changed by the user.

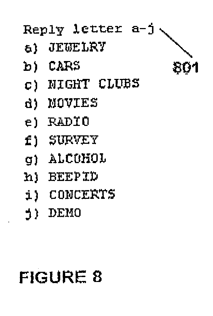

Once particular active information has been returned to a mobile terminal device 10, the system then makes this active information available for access any time in the future. This long-term retrieval can be done since the system stores a record of all information requested in association with the unique identification code which is in turn associated with the particular mobile terminal device 10. Information previously accessed can be accessed using a menu type interface shown in Figure 8 on the mobile terminal device 10. Using the interface the user can make a choice 801.

Based on past information invoking by each mobile terminal device 10, a page is created. The page contains information that is personalized based on the collective information published in information event's that were invoked. In the preferred embodiment, this page is formatted for access over a wireless network. A mobile terminal device 10 capable of WAP access is preferred, and the page includes more details than if accessed using basic SMS.

This allows a mobile terminal device 10 user to collect information from the initial point of information invoking. Information invoking can launch other applications which further perform other transactions or processes. An example of this would be to allow mobile terminal device users to subscribe to a service that would automatically send information without the need to specifically request it each time.

The system 30 further has the ability to remind users of an event, by scheduling alert dates and times in an internal reminder system.

Rather than SMS alerting, the system 30 in an alternative embodiment will deliver information to a user's message box for later retrieval using WAP. Using WAP circumvents the length limitations of an SMS message, while described using SMS, users could also retrieve information via other protocols. Traditional computer systems 19 connected to a network such as the Internet could also be used.

In an alternative embodiment referring to Figure 3, a messaging system server 30 is positioned between the advertiser server 40 and the end user 10. The advertiser is the owner of the information event.

Connections between the message server 30 and the advertisers server 40 are made, through a network 25 which is most likely wired, such as Internet, ISDN, telephone lines but not limited to this, and in fact could also be wireless.

In the preferred embodiment a mobile terminal device 10 is used for information invoking, over a wireless network 20 and the information is requested by the messaging server 30 from the advertiser's server 40.

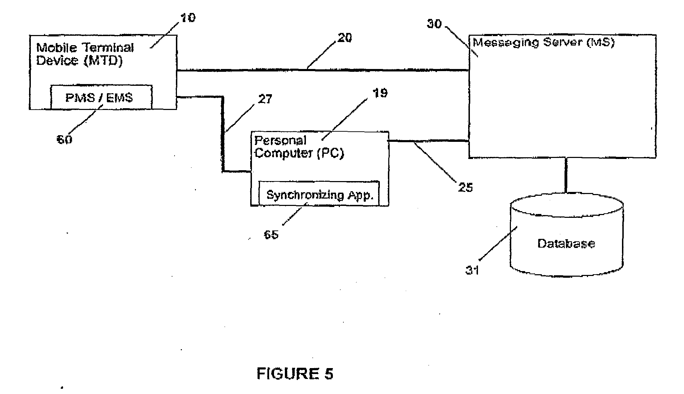

By allowing information invoking to be initiated by the users mobile terminal device 10, the request is processed and pertinent personal information stored by the message server 30. Any response required by the advertiser server 40 is managed by the message server 30. This means that the advertiser server 40 never sees the mobile number of the mobile terminal device 10 or personal details, unless they are made available by the user. The message server acts as an interactive bridge between advertisers 40 and mobile terminal device owners 10. This allows the privacy of the mobile terminal device 10 owner to be guaranteed and that they will not be spammed. In an alternative embodiment the processing power of mobile terminal devices 10 is taken advantage of. Referring to Figure 5, a portable messaging system application 60 is installed on the mobile terminal device 10. This application 60 emulates the connection to the messaging system 30. The application 60 emulates a connection to the messaging system 30 by storing all the necessary data files and application logic. Once the portable messaging system application 60 and data are installed into the mobile terminal device 10, any information invoking will be processed by the installed application, and no connection via wireless 20 or wired network 25 is necessary.

The portable messaging system application 60 can be installed on any device with sufficient processing power. Portable computing devices, such as personal digital assistants and advanced pagers have suitable processing power. Standard notebook style personal computer can also be utilized.
Processing of information objects is achieved by entering the HRAC into an interface rendered on the mobile terminal device 10 by the PMS. Entry of the HRAC is via built in keypad, hand writing recognition or voice recognition, but any method of entry could be used. The PMS will then extract the relevant information from a condensed internal database of the application 60 and display it on the mobile terminal device's 10 visual display.

In situations where the mobile terminal device cannot store all of the necessary data held within the main message server 30 database, the database downloaded into the mobile terminal device 10 can be optimized by pre-selecting categories and analyzing the user's historic requests.

Information invoking that requests data not stored by the device, will cause the PMS installed on the mobile terminal device, to present the user with options to connect the device to a wired 25 or wireless network 20. Whether a wired or wireless network is used will depending on the capabilities of the mobile terminal device 10.

In an alternatively embodiment, the mobile terminal device 10 can queue information invoking requests until the next time the mobile terminal device 10 updates its database. Updating the database is a procedure known as synchronization. Referring to Figure 5, synchronization requires the mobile terminal device to connect to a personal computer 19, using an interface cable or wireless connection 27. The personal computer 19 using a network connection 25 such as the internet exchanges data with the main message server 30.

The personal computer 19 would also have installed a synchronizing application 65 that communicates with the mobile terminal device via its connection 27. In another embodiment, the mobile terminal device 10 would synchronize directly with the message server 30, using a wireless connection 20, without the need to connect to the personal computer 19. An example of a suitable connection protocol is GPRS, but other suitable protocols could be used.

The synchronization process allows the device 10 to obtain information required for future information invoking and to forward transaction log data of past information invoking to the message server 30. This log is combined with the main message server 30 database.

The advantages to the user of the mobile terminal device 10, in using the PMS 60 to process information invoking rather than direct information invoking on a wireless connection to the message server 30, is that a more real-time response, and enhanced user experience is possible using the PMS on the mobile terminal device. Also the user can achieve cost savings by reducing the number of SMS's messages sent or data transmitted over the mobile network 20. Information can also be invoked using a personal computer 19 with the PMS application involved using wired 25 or wireless 20 networks.

An alternative embodiment uses a paging network to broadcast the necessary information to enable information invoking on a pager type device. Other types of broadcasting networks could be used. Several main types of paging networks exist, POCSAG, REFLEX and ERMES. There are both unidirectional and bidirectional capable networks. Pagers that can support bidirectional communications are treated as other mobile terminal devices. Bidirectional pagers that have the computing power to support the PMS application can use the PMS application.

Basic pagers that do not support bidirectional communication can still access information using HRAC's. The user will enter the HRAC into the basic pager and the pager will display the information as soon as it receives the message related to the HRAC. It is necessary for the information and HRAC's to be continually broadcast over the network to which the pager is connected. The basic pager filters out the message from all the broadcast messages and displays the information related the HRAC that the user has input into the basic pager.

Different HRAC's can be published in different locations. HRAC's would be typically be published by advertisers using traditional advertising media. No special media is required. This means that a company does not need to change their existing marketing processes if all they want to do, is to allow mobile terminal device users to collect information that was posted on the original media itself.

The message server 30 controls and tracks all information invoking and can provide a consolidated report on all mobile terminal device users over many information event interactions. The information event owner can get consolidated results on information invoking for information events that are not owned by them. This provides a holistic service that enables companies to consolidate long-term wireless marketing efforts and to better understand the mobile terminal device users behavior patterns spread out over many information events. This provides correlation between campaigns for different companies.

Mobile terminal device 10 owners arc not sent unsolicited SMS messages. The mobile terminal device 10 owner initiates information invoking. This guarantees their interest in the information and hence they are preferred target for advertising.

HRAC's could allow contact information to be requested. In the preferred embodiment of this use, encrypted HRAC's are used, but are not essential. In the preferred embodiment a menu system with multiple levels of interaction would allow the user of the mobile terminal device 10 to choose between several menu options. Example menu choices are: current address information, company services details, and request a brochure in either digital or hardcopy format. The message server will allow the owner of the business card information event to send those who have used the information invoking abilities of the card, updated information directly.

Groups of people could simultaneously exchange business card information without the physical need to exchange business cards. If an information event were configured so, a one-to-many or many-to-many exchange of contact information could be possible. An example of this is where one information event is published, and any mobile terminal device that invoked the information event would be given the contact information of all other mobile terminal device users that had invoked the information event.

If an information event is owned by more than one company, co-owners could post information related to the primary information event definition within the message server 30. This information event is publicly made available to mobile terminal device 10 users to query a building, or for example a shopping centre. The resulting response to the mobile terminal device 10 information invoking, would be information regarding promotions and events within the respective building, posted by co owners of the information event and preferably personalized for the mobile terminal device user 10. The mobile terminal device user through a menu system could be given the choice to subscribe to updates and future promotions posted on this information event.

This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

## Claims

1. A method of providing as a first party, third party access to second party information through a network, the third party using a device capable of receiving unsolicited communications (spam), without the second party receiving spam enabling information concerning the third party device, said method including the steps of:
receiving a request over said network, said request including an information identifier and a device identifier;
retrieving information associated with said information identifier and forwarding said information to said requesting device over said network; and
undertaking not to provide requesting device identifier to said second party.

2. A method of providing as a first party, third party access to second party information through a network as claimed in claim 1 wherein said step of retrieving information comprises sending a request for information including said information identifier to said second party and receiving information from said second party.

3. A method of providing as a first party, third party access to second party information through a network as claimed in either claim 1 or claim 2 including the steps of:
receiving a request for information identifiers from a second party;
sending information identifiers to said second party in response to said request; and
associating said sent information identifiers with the said second party.

4. A method of providing as a first party, third party access to second party information through a network, as claimed in any one of claims 1 to 3 including the steps of:
storing information on requests made using including each said information identifier; and
providing statistically data on requests made in relations to each identifier to said second party.

5. A method of providing as a first party, third party access to second party information through a network as claimed in claim 1 including the steps of:
receiving information from said second party;
storing said information;
associating an information identifier with said information; and
providing said information identifier to said second party so that said second party may disseminate said identifier.

6. A method of providing as a first party, third party access to second party information through a network, as claimed in claim 5 wherein multiple information identifiers are associated with the same information so that said second party may publish different identifiers by different means or in different locations.

7. A method of providing as a first party, third party access to second party information through a network, as claimed in claim 6 including the steps of:
storing information on requests made using each said information identifier; and
providing statistically data on requests made in relations to each identifier to said second party.

8. A method of providing as a first party, third party access to second party information through a network, as claimed in claim 7 including the step of associating identifier publication information with each said information identifier and wherein the step of providing statistically data on requests made in relations to each identifier to said second party includes providing identifier publication information.

9. A method of providing as a first party, third party access to second party information through a network, as claimed in anyone of claims 5 to 8 wherein said information is published by said second party using anyone of the set including newspapers, magazines, billboards, television, radio, email and the internet.

10. A method of providing as a first party, third party access to second party information through a network, as claimed in anyone of claims 5 to 9 including communicating with said device using a wireless network.

11. A method of providing as a first party, third party access to second party information through a network, as claimed in claim 10 wherein said accessing device is a cellular telephone.

12. A method of providing as a first party, third party access to second party information through a network, as claimed in claim 11 wherein said access device is a cellular telephone and said wireless network is an SMS network.

13. A method of providing as a first party, third party access to second party information through a network, as claimed in either claims 11 or claim 12 including the step of generating an information identifier; including optimizing information identifiers for entry using a cellular telephone keypad.

14. A method of providing as a first party, third party access to second party information through a network, as claimed in claim 13 wherein optimizing said information identifier for entry using a cellular telephone keypad excludes information identifiers requiring the same key to be pressed consecutively.

15. A method of providing as a first party, third party access to second party information through a network, as claimed in anyone of claim 8 to 14 including the steps of:
storing information on requests made using each said device identifier; and
providing access over said network from said device to previously accessed information via a structured menu.

16. A method of providing as a first party, third party access to second party information through a network, as claimed in claim 15 wherein access to said previously accessed information is provided via the internet.

17. A method of providing as a first party, third party access to second party information through a network, as claimed either claim 15 or claim 16 wherein said previously accessed information is stored and is accessible without connecting to said network.

18. A method of providing as a first party, third party access to second party information through a network, as claimed in claim 3 including the step of generating an information identifier and associating said identifier with information wherein said identifier is optimized for entry using a cellular telephone keypad.

19. A method of providing as a first party, third party access to second party information through a network, as claimed in claim 18 wherein optimizing said identifier for entry using a cellular telephone keypad excludes information identifier requiring the same key to be pressed consecutively.
